(19) Europäisches Patentamt
European Patent Office
Office européen des brevets

(11) **EP 4 787 611 A1**

(12) **EUROPEAN PATENT APPLICATION**
published in accordance with Art. 153(4) EPC

(43) Date of publication:
**05.08.2026   Bulletin 2026/32**

(21) Application number: **24870112.0**

(22) Date of filing: **06.08.2024**

(51) International Patent Classification (IPC):
**H01M 50/583** (2021.01)    **H01M 50/503** (2021.01)

(52) Cooperative Patent Classification (CPC):
**H01M 50/503; H01M 50/581; H01M 50/583;**
**Y02E 60/10**

(86) International application number:
**PCT/CN2024/110202**

(87) International publication number:
**WO 2025/066563 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023   CN 202322687725 U**

(71) Applicant: **BYD Company Limited**
**Shenzhen, Guangdong 518118 (CN)**

(72) Inventors:
• **SONG, Ning**
**Shenzhen, Guangdong 518118 (CN)**
• **LI, Zhongchao**
**Shenzhen, Guangdong 518118 (CN)**
• **LIN, Wensheng**
**Shenzhen, Guangdong 518118 (CN)**
• **WANG, Gaowu**
**Shenzhen, Guangdong 518118 (CN)**

(74) Representative: **Taor, Simon Edward William et al**
**Venner Shipley LLP**
**TIDE Bankside**
**8 Emerson Street**
**London SE1 9DU (GB)**

(54) **CONNECTING SHEET, BATTERY PACK AND ELECTRIC APPARATUS**

(57)   A connecting sheet, a battery pack, and an electric device are provided. The connecting sheet includes a body. The body is provided with: an electrode connecting portion, where the electrode connecting portion is configured to be connected to an electrode terminal; and a fusing portion, where the fusing portion is disposed on a side of the electrode connecting portion, a minimum distance d0 between the fusing portion and an outer peripheral edge of the electrode connecting portion is 2 mm to 20 mm, and a current-passing area of the fusing portion is less than a current-passing area of a remaining portion on the body.

FIG. 2

**Description**

**CROSS REFERENCE TO RELATED APPLICATIONS**

This application is provided based on Chinese Patent Application No. 202322687725.X, filed on September 28, 2023, and claims priority to this Chinese Patent Application, which is incorporated herein by reference in its entirety.

**TECHNICAL FIELD**

This application relates to the field of battery technologies, and more specifically, to a connecting sheet, a battery pack having the connecting sheet, and an electric device.

**BACKGROUND**

Currently, when cylindrical battery cells are used as power batteries for new energy vehicles, a capacity of an overall battery pack generally needs to be increased by connecting the battery cells in series and parallel. In a state of series-parallel connection of a plurality of battery cells, when a battery cell experiences thermal runaway, remaining battery cells will undergo external short-circuit discharge. Continuous short-circuit discharge generates a large amount of heat, leading to heat diffusion and posing some safety hazards.

**SUMMARY**

This application aims to resolve one of the technical problems in the related art at least to a certain extent.

Therefore, an objective of this application is to provide a new technical solution of a connecting sheet, which can at least resolve a problem in the conventional technology that a fusing speed of the connecting sheet cannot meet requirements.

Another objective of this application is to provide a battery pack.

Another objective of this application is to provide an electric device.

According to a first aspect of this application, a connecting sheet is provided, including a body. The body is provided with: an electrode connecting portion, where the electrode connecting portion is configured to be connected to an electrode terminal; and a fusing portion, where the fusing portion is disposed on a side of the electrode connecting portion, a minimum distance $d_0$ between the fusing portion and an outer peripheral edge of the electrode connecting portion is 2 mm to 20 mm, and a current-passing area of the fusing portion is less than a current-passing area of a remaining portion on the body.

According to the connecting sheet in this embodiment of this application, the fusing portion is disposed at a position close to the electrode connecting portion. During use, if a battery cell experiences thermal runaway, runaway heat will accelerate temperature rise of the connecting sheet and accelerate a fusing speed of the fusing portion. In addition, a local fusing defect has little impact on passing current between electrode terminals and strength of the connecting sheet, and does not affect normal use of the connecting sheet.

According to a second aspect of this application, a battery pack is provided, including: a plurality of battery cells, where each of the battery cells is provided with an electrode terminal; and the connecting sheet according to the foregoing embodiment, where the electrode connecting portion is connected to the electrode terminal.

According to the battery pack in this application, during use, if a battery cell experiences thermal runaway, runaway heat will accelerate temperature rise of the connecting sheet and accelerate a fusing speed of the fusing portion. In addition, a local fusing defect has little impact on passing current between electrode terminals and strength of the connecting sheet, and does not affect normal use of the connecting sheet.

According to a third aspect of this application, an electric device is provided, including the battery pack described in the foregoing embodiment.

According to the electric device in this application, during use, if a battery cell experiences thermal runaway, runaway heat will accelerate temperature rise of the connecting sheet and accelerate a fusing speed of the fusing portion. In addition, a local fusing defect has little impact on passing current between electrode terminals and strength of the connecting sheet, and does not affect normal use of the connecting sheet.

A part of additional aspects and advantages of this application will be given in the following description, and a part will become apparent from the following description, or will be learned through practice of this application.

**BRIEF DESCRIPTION OF DRAWINGS**

FIG. 1 is a schematic diagram of a structure of a connecting sheet according to an embodiment of this application;

FIG. 2 is a schematic diagram of a local structure of a connecting sheet according to another embodiment of this application;

FIG. 3 is a schematic diagram of a local structure of a connecting sheet according to yet another embodiment of this application;

FIG. 4 is a schematic diagram of a local structure of a connecting sheet according to still yet another embodiment of this application;

FIG. 5 is a schematic diagram of a local structure of a connecting sheet according to another embodiment of this application; and

FIG. 6 is a diagram showing a usage state of a connecting sheet according to an embodiment of this application.

## DESCRIPTION OF EMBODIMENTS

Various exemplary embodiments of this application are described now in detail with reference to the accompanying drawings. It should be noted that unless otherwise specifically specified, the relative arrangements, numeric expressions, and values of the components and steps described in these embodiments do not limit the scope of this application.

The following descriptions of at least one exemplary embodiment are merely illustrative, and should not be construed as any limitation on this application and implementation or use thereof.

Techniques, methods and devices known to a person of ordinary skill in the relevant art may not be discussed in detail. However, where appropriate, the techniques, methods and devices should be considered as a part of the specification.

In all the examples shown and discussed herein, any specific value should be construed as merely an example and not as a limitation. Therefore, other examples of exemplary embodiments may have different values.

It should be noted that similar reference numerals and letters represent similar items in the following accompanying drawings. Therefore, once a specific item is defined in one of the accompanying drawings, no further discussion thereof is required in the subsequent accompanying drawings.

The following first specifically describes a connecting sheet 100 according to the embodiments of this application with reference to the accompanying drawings.

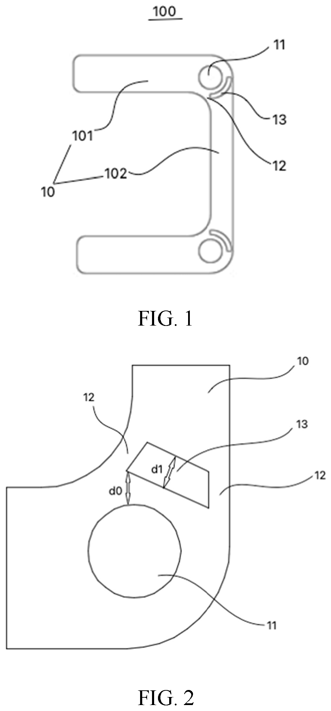

As shown in FIG. 1 to FIG. 6, the connecting sheet 100 according to the embodiments of this application includes a body 10, and the body 10 is provided with an electrode connecting portion 11 and a fusing portion 12.

Specifically, the electrode connecting portion 11 is configured to be connected to an electrode terminal, the fusing portion 12 is disposed on a side of the electrode connecting portion 11, and a minimum distance $d_0$ between the fusing portion 12 and an outer peripheral edge of the electrode connecting portion 11 is 2 mm to 20 mm. A current-passing area of the fusing portion 12 is less than a current-passing area of a remaining portion on the body 10.

In other words, the connecting sheet 100 according to the embodiments of this application mainly includes the body 10, that is, the body 10 constitutes a main portion of the connecting sheet 100. The connecting sheet 100 can be configured to be connected to electrode terminals of adjacent battery cells to implement assembly of adjacent battery cells. The body 10 is provided with an electrode connecting portion 11 and a fusing portion 12. The electrode connecting portion 11 serves to be connected to an electrode terminal. For example, the electrode connecting portion 11 may be welded to the electrode terminal. The electrode connecting portion 11 may be a connecting hole disposed on the body 10, or may be another structure that can be connected to the electrode terminal, which is not limited herein. For example, when the electrode connecting portion 11 is a connecting hole disposed on the body 10, the outer peripheral edge of the electrode connecting portion 11 may be an edge of the connecting hole or an outer periphery of a weld mark welded between the connecting hole and the electrode terminal. When the electrode connecting portion 11 is a preset point disposed on the body 10, the outer peripheral edge of the electrode connecting portion 11 may be an outer periphery of a weld mark welded between the body 10 and the electrode terminal.

The fusing portion 12 is disposed at a position close to the electrode connecting portion 11. As shown in FIG. 1 and FIG. 2, a minimum distance $d_0$ between the fusing portion 12 and the electrode connecting portion 11 is controlled between 2 mm and 20 mm. The fusing portion 12, as a defect fusing point, is arranged near a connection site between the connecting sheet 100 and the battery cell. A current-passing area of the fusing portion 12 is smaller than a current-passing area of a remaining portion on the body 10, that is, a width or a thickness of the fusing portion 12 is a portion with a smallest width or thickness of the body 10 during current passing. When the battery cell experiences thermal runaway, the body 10 is subjected to high temperature, which accelerates fusing in a region in which the fusing portion 12 is located, thereby accelerating a rate at which the connecting sheet 100 disconnects electrical connection.

In addition, a fusing defect in a local region is disposed close to a position at which the electrode connecting portion 11 is located. Providing the fusing defect at a proper position has little impact on a current-passing area between battery cells and strength of the connecting sheet 100, and does not affect normal connection performance of the connecting sheet 100. Especially for battery cells connected in parallel, a problem that it is difficult for the fusing defect to be fused due to a low voltage and a relatively small short-circuit current when a short circuit occurs between parallel-connected battery cells can be effectively avoided, thereby reducing safety hazards.

Therefore, according to the connecting sheet 100 in the embodiments of this application, the fusing portion 12 is disposed at a position close to the electrode connecting portion 11. During use, if the electrode terminal experiences thermal runaway, runaway heat will accelerate temperature rise of the connecting sheet and accelerate a fusing speed of the fusing portion 12. In addition, a local fusing defect has little impact on passing current between electrode terminals and strength of the connecting sheet 100, and does not affect normal use of the connecting sheet 100.

According to some embodiments of this application, a thinning design is performed at a position close to the electrode connecting portion 11, that is, a thickness of a portion of the body 10 is reduced at a proper position. For example, a recess is provided on the body 10 by removing material or the like on a side of the body 10 in a thickness direction, and the recess extends through the body 10 in a width direction of the body 10. A distance between the recess and the other side of the body 10 in the thickness direction is less than a thickness of a remaining portion of the body 10. A portion with a smallest distance between the recess and the other side of the body 10 in the thickness direction is formed into a fusing portion 12. This manner is easy to implement. Certainly, the thickness can be reduced in other manners, which are not limited herein.

According to some embodiments of this application, the body 10 is provided with at least one through-port 13 running through the body 10 in the thickness direction thereof, a portion with a shortest distance between an edge of the through-port 13 and an edge of the body 10 or a portion with a shortest distance between an edge of the through-port 13 and an edge of an adjacent through-port 13 forms at least one sub-fusing portion, and the fusing portion 12 includes at least one sub-fusing portion.

In other words, the fusing portion 12 on the connecting sheet 100 according to the embodiments of this application may include a plurality of sub-fusing portions. A specific quantity of sub-fusing portions may be properly adjusted according to a quantity of electrode connecting portions 11 and a requirement of passing current. One sub-fusing portion in the fusing portions 12 may be implemented by providing a through-port 13 on the body 10. By providing the through-port 13, a size of the connecting sheet 100 can be reduced, for example, in a width direction, thereby forming the fusing portion 12. A quantity of through-ports 13 may be one or more, so as to satisfy use requirements of different products.

In some specific implementations of this application, one through-port 13 is provided at a position of the body 10 corresponding to the electrode connecting portion 11, the through-port 13 is formed into a recess recessed inward along one side edge of the body 10, and the sub-fusing portion is formed between the edge of the through-port and the other side edge of the body 10.

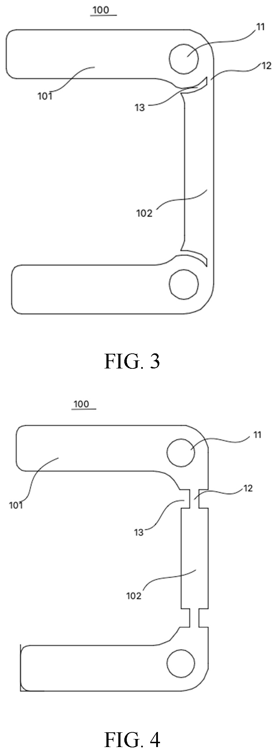

Specifically, as shown in FIG. 3, in this embodiment, one side edge that is of the body 10 and that is close to one electrode connecting portion 11 is provided with a recess recessed toward an interior of the body 10. The recess structure constitutes a through-port 13, and a portion between an edge of the through-port 13 and the other side edge that is of the body 10 and that is close to the electrode connecting portion 11 forms the fusing portion 12. Therefore, the body 10 with this structure is simple to form and easy to manufacture on the basis of ensuring a fusing speed and a fusing effect.

Optionally, according to some embodiments of this application, two through-ports 13 are provided at a position of the body 10 corresponding to the electrode connecting portion 11, the two through-ports 13 are disposed on two opposite side edges of the body 10, each through-port 13 is formed into a recess recessed inward along the edge of the body 10, and the sub-fusing portion is formed between edges of the two through-ports 13.

As shown in FIG. 4, in this embodiment, two side edges that are of the body 10 and that are close to one electrode connecting portion 11 are respectively provided with recesses recessed toward the interior of the body 10, the two recess structures respectively constitute through-ports 13, and a fusing portion 12 is formed between opposite edges of the two through-ports 13. Therefore, the body 10 with this structure can make forces on two sides of the fusing portion 12 relatively uniform, and strength of the body 10 can be effectively ensured on the basis of ensuring the fusing speed and the fusing effect.

In some other specific implementations of this application, one through-port 13 is provided at a position of the body 10 corresponding to the electrode connecting portion 11, the through-port 13 is disposed between two opposite side edges of the body 10, and the sub-fusing portion is formed between the edge of the through-port 13 and each of the two side edges of the body 10.

Specifically, as shown in FIG. 1 and FIG. 2, in this embodiment, one through-port 13 may be provided at a position of the body 10 corresponding to one electrode connecting portion 11. The through-port 13 may be formed into a through hole disposed in a middle of the body 10. A region between an inner edge that is of the through-port 13 and that is close to a side edge of the body 10 and the side edge of the body 10 forms a fusing portion 12. The inner edge that is of the through-port 13 and that is close to the side edge of the body 10 may be a straight line, a curve, or another available linear structure. That is, a shape of the through-port 13 may be, for example, a trapezoidal structure shown in FIG. 2, or a circular arc-shaped structure shown in FIG. 1. Therefore, the body 10 with this structure is not only easy to form, but also ensures overall strength of the body 10 on the basis of ensuring the fusing speed and the fusing effect.

**EP 4 787 611 A1**

Optionally, according to some embodiments of this application, a plurality of through-ports 13 are provided at a position of the body 10 corresponding to the electrode connecting portion 11, the plurality of through-ports 13 are spaced apart between two opposite side edges of the body 10, a first sub-fusing portion is formed between the edge of the body 10 and an edge that is of the through-port 13 and that is close to the edge of the body 10, and a second sub-fusing portion is formed between edges of two adjacent through-ports.

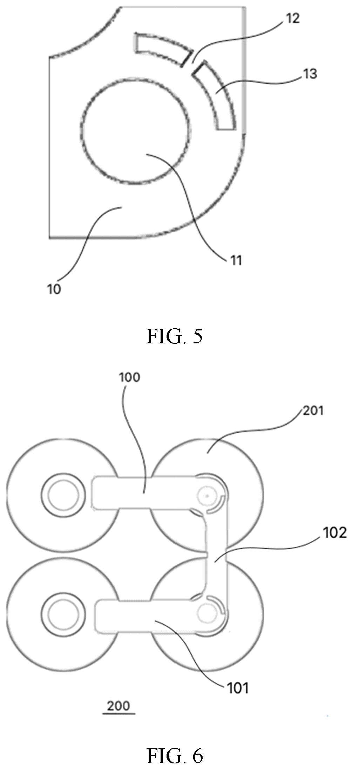

As shown in FIG. 5, in this embodiment, two through-ports 13 are provided between two side edges of a position of the body 10 corresponding to one electrode connecting portion 11, and each through-port 13 is formed into a hole-type structure with a closed periphery. A region between an inner edge of each through-port 13 and a side edge of the through-port 13 closest to the body 10 forms a first sub-fusing portion, and a region between inner edges of two adjacent through-ports 13 forms a second sub-fusing portion. That is, three sub-fusing portions are provided on the body 10 shown in FIG. 5, and the three sub-fusing portions together form the fusing portion 12. Therefore, the body 10 with this structure can further ensure strength of the body 10 on the basis of controlling the fusing speed and the fusing effect.

In some specific implementations of this application, the electrode connecting portion 11 is formed into a circular shape, and at least one through-port 13 is formed into a sector-shaped through-hole concentric with the electrode connecting portion 11.

Specifically, as shown in FIG. 1, FIG. 2, or FIG. 5, the electrode connecting portion 11 connected to the electrode terminal on the body 10 is a circular structure, and the through-port 13 is formed into a hole-type structure disposed between two side edges of the body 10. The shape of the through-port 13 is adapted to a shape of the electrode connecting portion 11. That is, the through-port 13 may be formed into a sector-shaped through-hole coaxial with the electrode connecting portion 11. Fusing portions 12 are formed between inner edges of two sides of the through-port 13 with this structure and two side edges of the body 10, respectively.

Considering that the fusing speed of the connecting sheet 100 is determined by a position of the fusing portion 12 and a fusing point of a material of the connecting sheet 100, a temperature at the position of the fusing portion 12 is affected by temperature rise of passing current and transfer of heat from thermal runaway, and corresponding parameters all have corresponding calculation formulas. For example, after the connecting sheet 100 is assembled with a battery cell and the battery cell thermally runs away, a short-circuit current can be calculated by using the formula $n \times U_{\text{battery cell}}/R_{\text{runaway battery cell}}$, where n is a quantity of battery cells. A resistance value of the battery cell after thermal runaway is approximately $0.03\Omega$, and the short-circuit current is obtained to be approximately $I = 100 \times (n\text{-}1)$ A.

The connecting sheet 100 may be made of an aluminum material, and a temperature at the fusing point when the fusing portion 12 is fused needs to reach 660°C. Therefore, a structure of the connecting sheet 100 needs to be properly designed.

A thickness of the connecting sheet 100 is h, a current-passing area S of the fusing portion 12 is equal to $l \times h$, and l is a width of the fusing portion 12. The through-port 13 is formed into a slit structure. A width d1 of the slit (as shown in FIG. 2) and the current-passing area S determine a local resistance R of a current-passing region, and $R = \rho_{\text{resistivity}} \times d1 \div S$. Therefore, heat generated by the short-circuit current through the slit is $Q_{\text{passing current}} = I^2 \times R$.

During a thermal runaway procedure, heat is generated for approximately 30s, and the heat generated during thermal runaway is transferred from a terminal post of the battery cell to the connecting sheet 100. A heating power is inversely proportional to a heat transfer distance, which may be approximately $Q_{\text{thermal runaway}} = 15/d0$ W.

Therefore, $Q_{\text{total}} = I^2 \times R + 15/d0$. A temperature rise speed of the slit is $dT/dt = (I^2 \times R + 15/d0)/Cp/m$, where Cp is a specific heat capacity of aluminum, m is a mass of aluminum in the slit, and $m = \rho_{\text{density}} \times 1 \times d1 \times h$. If a non-diffusion requirement is satisfied, a fusing requirement within 30 seconds must be satisfied, that is, the temperature rise speed is greater than 21.2°C/s. $dT/dt = (I^2 \times R + 15/d0)/Cp/m > 21.2$.

That is,

$$\frac{10000 \times (n-1)^2 \times (\rho_{\text{resistivity}} \times d1 \div S) + 15 \div d0}{Cp \times (\rho_{\text{density}} \times d1 \times S)} > 21.2°C/s,$$

where $\rho_{\text{resistivity}}$ is a resistivity of the fusing portion 12, $\rho_{\text{density}}$ is a density of the fusing portion 12, Cp is a specific heat capacity of the fusing portion 12, S is a current-passing area of the fusing portion 12, d1 is a distance between a side that is of the through-port 13 and that is close to the electrode connecting portion 11 and a side that is of the through-port 13 and that is away from the electrode connecting portion 11, and n is a quantity of battery cells disposed in parallel.

With reference to conditions such as a design strength requirement and process feasibility of the connecting sheet 100, according to some embodiments of this application, the distance d1 between a side that is of the through-port 13 and that is close to the electrode connecting portion 11 and a side that is of the through-port 13 and that is away from the electrode connecting portion 11 is 1 mm to 5 mm, and preferably 1 mm to 3 mm. Optionally, a thickness h of the body 10 is 0.1 mm to 1.5 mm.

That is, considering a fusing requirement and a cost requirement of the connecting sheet 100, a design rule of the connecting sheet 100 is as follows: The distance d0 between the fusing portion 12 and the electrode connecting portion 11 should be between 2 mm and 20 mm, and the width d1 of the slit should be between 1 mm and 3 mm. Therefore, the connecting sheet 100 with this structure is easier to manufacture and have more controllable costs on the basis of ensuring the fusing speed and the fusing effect.

Optionally, according to some embodiments of this application, there is one fusing portion 12, and a relation between an area S of the fusing portion 12 and the thickness h of the body 10 is $0.5 \text{ mm}^2 \leq S = l*h \leq 10 \text{ mm}^2$, where l is a minimum width of the fusing portion 12.

As shown in FIG. 3 and FIG. 4, in this embodiment, there is only one fusing portion 12, and the minimum width of the fusing portion 12 is l. The area S of the fusing portion 12 with this structure is a product of the width l of the fusing portion 12 and the thickness of the connecting sheet 100. The area S of the fusing portion 12 is between $1 \text{ mm}^2$ and $10 \text{ mm}^2$, thereby ensuring the fusing effect of the fusing portion 12.

In some other specific embodiments of this application, there are a plurality of fusing portions 12, the plurality of fusing portions 12 are spaced apart, a relation between the area S of the fusing portion 12 and the thickness h of the body 10 is: $0.5 \text{ mm}^2 \leq S = L*h \leq (n-1) \times 10 \text{ mm}^2$, where L is a sum of minimum widths of the plurality of fusing portions 12, and n is a quantity of battery cells disposed in parallel.

As shown in FIG. 1, FIG. 2, and FIG. 5, in this embodiment, there are at least two fusing portions 12, where each fusing portion 12 has a minimum width, a sum of minimum widths of the plurality of fusing portions 12 is L, the area S of the fusing portion 12 with this structure is a product of a sum L of minimum widths of the plurality of fusing portions 12 and the thickness of the connecting sheet 100. The area S of the fusing portion 12 is greater than $1 \text{ mm}^2$, and is less than $(n-1) \times 10 \text{ mm}^2$. Because a quantity of battery cells disposed in parallel affects the short-circuit current, the current-passing area S of the fusing portion 12 is adjusted with the quantity of battery cells disposed in parallel.

In addition, for a steel or copper connecting sheet 100, a design principle of a fusing portion 12 thereof is the same as a design principle of the fusing portion 12 of the aluminum connecting sheet 100. Considering a difference in material, for a steel connecting sheet 100, a relation between an area S of the fusing portion 12 thereof and the thickness h of the body 10 is: $0.5 \text{ mm}^2 \leq S = L*h \leq (n-1) \times 3 \text{ mm}^2$, where L is the sum of minimum widths of the plurality of fusing portions 12, and n is the quantity of battery cells disposed in parallel. For a copper connecting sheet 100, a relation between an area S of a fusing portion 12 thereof and the thickness h of the body 10 is $0.5 \text{ mm}^2 \leq S = L*h \leq (n-1) \times 5 \text{ mm}^2$, where L is the sum of minimum widths of the plurality of fusing portions 12, and n is the quantity of battery cells disposed in parallel.

Optionally, a quantity of sub-fusing portions is less than or equal to 5, that is, there may be 1 to 5 sub-fusing portions. A quantity of parallel-connected battery cells determines a magnitude of the short-circuit current after thermal runaway of the battery cells. Therefore, the current-passing area also needs to be determined with reference to the quantity of parallel-connected battery cells. Therefore, while the fusing effect of the fusing portion 12 is ensured, overall strength of the connecting sheet 100 can be further ensured.

According to an embodiment of this application, the body 10 includes a plurality of series connection segments 101 and a parallel connection segment 102.

Specifically, the plurality of series connection segments 101 are spaced apart from each other, and the parallel connection segment 102 is connected to two adjacent series connection segments 101. The electrode connecting portion 11 is disposed at a connection between the parallel connection segment 102 and the series connection segment 101, and the fusing portion 12 is disposed on a side that is of the electrode connecting portion 11 and that is close to the parallel connection segment 102.

That is, the connecting sheet 100 may include a plurality of series connection segments 101 and a parallel connection segment 102, where the series connection segments 101 may be configured to be connected to electrode terminals of a plurality of battery cells disposed in series, and the parallel connection segment 102 is configured to be connected to two adjacent series connection segments 101. Therefore, the connecting sheet 100 can be connected to a plurality of electrode terminals.

Optionally, there are two series connection segments 101, and the two series connection segments 101 are disposed on a same side of the parallel connection segment 102.

In some other specific implementations of this application, the two series connection segments 101 are parallel to each other, and the parallel connection segment 102 is perpendicular to the series connection segments 101 or inclined relative to the series connection segments 101.

Specifically, as shown in FIG. 6, the two series connection segments 101 may be connected to one parallel connection segment 102 to form a ⊂-shaped structure, the plurality of battery cells 201 are connected in parallel, and positive electrodes and negative electrodes of the battery cells 201 may be properly adjusted as needed. The two series connection segments 101 may be connected to one parallel connection segment 102 to form a C-shaped structure. Therefore, the connecting sheet 100 with this structure can satisfy connection of two groups of parallel-connected battery cells 201.

According to some embodiments of this application, there are two series connection segments 101, and the two series connection segments 101 are disposed on two sides of the parallel connection segment 102. The two series connection segments 101 are connected to a same end of the parallel connection segment 102, and the two series connection segments 101 are symmetrically disposed relative to the parallel connection segment 102.

Optionally, there are a plurality of series connection segments 101 and a plurality of parallel connection segments 102, and the plurality of series connection segments 101 and the plurality of parallel connection segments 102 are arranged alternately in sequence.

In other words, the connecting sheet 100 with this structure can satisfy connection of a plurality of groups of parallel-connected battery cells 201.

A battery pack 200 according to this embodiment of this application includes a plurality of battery cells 201 and the connecting sheet 100 according to the foregoing embodiments. Each battery cell 201 is provided with an electrode terminal, and the electrode connecting portion 11 is connected to the electrode terminal. Optionally, the electrode terminal is a terminal post or a housing of the battery cell 201.

An electric device according to this embodiment of this application includes the battery pack 200 according to the foregoing embodiment. The electric device may be a vehicle or the like. Because the connecting sheet 100 according to the foregoing embodiments of this application has the foregoing technical effects, the battery pack 200 and the electric device according to the embodiments of this application also have corresponding technical effects, that is, the connecting sheet 100 has a good fusing effect and high security.

Although some specific embodiments of this application have been described in detail by using examples, a person skilled in the art should understand that the foregoing examples are merely for description, and are not intended to limit the scope of this application. A person skilled in the art should understand that modifications may be made to the foregoing embodiments without departing from the scope and spirit of this application. The scope of this application is defined by the appended claims.

**Claims**

1. A connecting sheet, comprising a body (10), wherein the body (10) is provided with:

   an electrode connecting portion (11), wherein the electrode connecting portion (11) is configured to be connected to an electrode terminal; and
   a fusing portion (12), wherein the fusing portion (12) is disposed on a side of the electrode connecting portion (11), a minimum distance d0 between the fusing portion (12) and an outer peripheral edge of the electrode connecting portion (11) is 2 mm to 20 mm, and a current-passing area of the fusing portion (12) is less than a current-passing area of a remaining portion on the body.

2. The connecting sheet according to claim 1, wherein the body (10) is provided with at least one through-port (13) running through the body (10) in a thickness direction thereof, a portion with a shortest distance between an edge of the through-port (13) and an edge of the body (10) or a portion with a shortest distance between an edge of the through-port (13) and an edge of an adjacent through-port (13) forms at least one sub-fusing portion, and the fusing portion (12) comprises at least one sub-fusing portion.

3. The connecting sheet according to claim 2, wherein one through-port (13) is provided at a position of the body (10) corresponding to the electrode connecting portion (11), the through-port (13) is formed into a recess recessed inward along one side edge of the body (10), and the sub-fusing portion is formed between the edge of the through-port (13) and the other side edge of the body (10).

4. The connecting sheet according to claim 2, wherein two through-ports (13) are provided at a position of the body (10) corresponding to the electrode connecting portion (11), the two through-ports (13) are disposed on two opposite side edges of the body (10), each through-port (13) is formed into a recess recessed inward along the edge of the body (10), and the sub-fusing portion is formed between edges of the two through-ports (13).

5. The connecting sheet according to claim 2, wherein one through-port (13) is provided at a position of the body (10) corresponding to the electrode connecting portion (11), the through-port (13) is disposed between two opposite side edges of the body (10), and the sub-fusing portion is formed between the edge of the through-port (13) and each of the two side edges of the body (10).

6. The connecting sheet according to claim 2, wherein a plurality of through-ports (13) are provided at a position of the body (10) corresponding to the electrode connecting portion (11), the plurality of through-ports (13) are spaced apart between two opposite side edges of the body (10), a first sub-fusing portion is formed between the edge of the body

(10) and an edge that is of the through-port (13) and that is close to the edge of the body (10), and a second sub-fusing portion is formed between edges of two adjacent through-ports (13).

7. The connecting sheet according to claim 2, wherein the electrode connecting portion (11) is formed into a circular shape, and at least one through-port (13) is formed into a sector-shaped through-hole concentric with the electrode connecting portion (11).

8. The connecting sheet according to claim 2, wherein a distance d1 between a side that is of the through-port (13) and that is close to the electrode connecting portion (11) and a side that is of the through-port (13) and that is away from the electrode connecting portion (11) is 1 mm to 5 mm.

9. The connecting sheet according to claim 2, wherein a quantity of sub-fusing portions is less than or equal to 5.

10. The connecting sheet according to claim 1, wherein the body (10) comprises:

    a plurality of series connection segments (101), and the plurality of series connection segments (101) are spaced apart from each other; and
    a parallel connection segment (102), wherein the parallel connection segment (102) is connected to two adjacent series connection segments (101), the electrode connecting portion (11) is disposed at a connection between the parallel connection segment (102) and the series connection segment (101), and the fusing portion (12) is disposed on a side that is of the electrode connecting portion (11) and that is close to the parallel connection segment (102).

11. The connecting sheet according to claim 10, wherein there are two series connection segments (101), and the two series connection segments (101) are disposed on a same side of the parallel connection segment (102).

12. The connecting sheet according to claim 11, wherein the two series connection segments (101) are parallel to each other, and the parallel connection segment (102) is perpendicular to the series connection segments (101) or inclined relative to the series connection segments (101).

13. The connecting sheet according to any one of claims 1 to 12, wherein a thickness h of the body (10) is 0.1 mm to 1.5 mm.

14. A battery pack (200), comprising:

    a plurality of battery cells (201), wherein each of the battery cells (201) is provided with an electrode terminal; and
    the connecting sheet according to any one of claims 1 to 13, wherein the electrode connecting portion (11) is connected to the electrode terminal.

15. The battery pack according to claim 14, wherein the body (10) is provided with at least one through-port (13) running through the body (10) in a thickness direction thereof; and

    a temperature rise speed dT/dt of the fusing portion (12) satisfies the following relation:

$$dT/dt = \frac{10000 \times (n-1)^2 \times (\rho_{resistivity} \times d1 \div S) + 15 \div d0}{Cp \times (\rho_{density} \times d1 \times S)} > 21.2\,°C/s,$$

    wherein $\rho_{resistivity}$ is a resistivity of the fusing portion (12), $\rho_{density}$ is a density of the fusing portion (12), Cp is a specific heat capacity of the fusing portion (12), S is a current-passing area of the fusing portion (12), d1 is a distance between a side that is of the through-port (13) and that is close to the electrode connecting portion (11) and a side that is of the through-port (13) and that is away from the electrode connecting portion (11), and n is a quantity of battery cells disposed in parallel.

16. The battery pack according to claim 15, wherein there is one fusing portion (12), the current-passing area S of the fusing portion (12) is 0.5 mm$^2$ $\leq$ S = l*h $\leq$ 10 mm$^2$, wherein l is a minimum width of the fusing portion (12), and h is a thickness of the body (10).

17. The battery pack according to claim 15, wherein there are a plurality of fusing portions (12), the plurality of fusing portions (12) are spaced apart, a relation between an area S of the fusing portion (12) and the thickness h of the body (10) is: $0.5\,mm^2 \leq S = L*h \leq (n-1) \times 10\,mm^2$, wherein L is a sum of minimum widths of the plurality of fusing portions (12), n is a quantity of battery cells (201) disposed in parallel, and h is a thickness of the body (10).

18. The battery pack (200) according to any one of claims 14 to 17, wherein the electrode terminal is a terminal post or a housing of the battery cell (201).

19. An electric device, comprising the battery pack (200) according to any one of claims 14 to 18.

100

FIG. 1

FIG. 2

FIG. 3

FIG. 4

FIG. 5

FIG. 6

## INTERNATIONAL SEARCH REPORT

| International application No. |
|---|
| **PCT/CN2024/110202** |

### A. CLASSIFICATION OF SUBJECT MATTER

H01M50/583(2021.01)i; H01M50/503(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 电极, 端子, 连接片, 熔断, 最小, 距离, battery, electrode, terminal, connecting sheet, fuse, minimum, distance

### C. DOCUMENTS CONSIDERED TO BE RELEVANT

| Category* | Citation of document, with indication, where appropriate, of the relevant passages | Relevant to claim No. |
|---|---|---|
| PX | CN 221176573 U (BYD CO., LTD.) 18 June 2024 (2024-06-18) description, paragraphs 3-90, and figures 1-6 | 1-19 |
| X | TW 202205732 A (ROBERT BOSCH GMBH) 01 February 2022 (2022-02-01) claims 1-9, description, paragraphs 4-54, and figures 1-4 | 1-19 |
| X | WO 2018215131 A1 (ROBERT BOSCH GMBH) 29 November 2018 (2018-11-29) claims 1-10, description, page 4, paragraph 1 to page 15, paragraph 3, and figures 1-4 | 1-19 |
| A | US 2012129040 A1 (SAMSUNG SDI CO., LTD.) 24 May 2012 (2012-05-24) entire document | 1-19 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2024** | **24 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 787 611 A1**

### INTERNATIONAL SEARCH REPORT
Information on patent family members

| International application No. |
| --- |
| **PCT/CN2024/110202** |

| Patent document cited in search report | | | Publication date (day/month/year) | Patent family member(s) | | | Publication date (day/month/year) |
| --- | --- | --- | --- | --- | --- | --- | --- |
| CN | 221176573 | U | 18 June 2024 | None | | | |
| TW | 202205732 | A | 01 February 2022 | WO | 2021259641 | A1 | 30 December 2021 |
| | | | | DE | 102020207893 | A1 | 30 December 2021 |
| WO | 2018215131 | A1 | 29 November 2018 | DE | 102017208834 | A1 | 29 November 2018 |
| | | | | IN | 201917047880 | A | 03 January 2020 |
| | | | | EP | 3631882 | A1 | 08 April 2020 |
| | | | | IN | 486056 | B | 22 December 2023 |
| US | 2012129040 | A1 | 24 May 2012 | KR | 20120054337 | A | 30 May 2012 |
| | | | | KR | 101219233 | B1 | 09 January 2013 |

Form PCT/ISA/210 (patent family annex) (July 2022)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322687725X